# EUROPEAN PATENT APPLICATION

(11) **EP 1 671 772 A1**
(43) Date of publication of application: **21.06.2006**
(21) Application number: 04772395.2
(22) Date of filing: 24.08.2004
(51) Int. Cl.: B29B 7/84, C08F 6/10

(54) **APPARATUS FOR PRODUCING POLYMER**

(30) Priority: 28.08.2003 JP 2003304960
(71) Applicant: OHMI, Tadahiro, Sendai-shi, Miyagi 980-0813 (JP); ZEON CORPORATION, Tokyo 100-8246 (JP)
(72) Inventor: OHMI, Tadahiro, Sendai-shi, Miyagi 9800813 (JP); TADA, Mitsushi, (JP); JIMBO, Toshihiko, (JP)
(74) Representative: Vossius & Partner
(86) International application number: PCT/JP2004/012439
(87) International publication number: WO 2005/021227

(57) **Abstract**

An apparatus for producing a polymer, wherein the surface of a member contacting with the polymer of a device for melting and molding a raw material polymer has been subjected to a passivation treatment and is covered by a passive film, wherein ultra-pure water is used as a solvent to be injected into a molten polymer, to prevent the incorporation of a contaminant, and wherein an inert gas is fed to the line for discharging a gas, to prevent the contamination by back diffusion. As the above passive film, an aluminum oxide film or a chromium oxide film is preferred.

## Description

### Technical Field

This invention relates to a polymer producing apparatus for producing a high purity polymer with a very small amount of volatile components from a normally used polymer such as resin or rubber.

### Background Art

Generally, a large amount of organic volatile matter (outgas/molecular contaminants) is produced from a polymer such as resin or rubber during use and causes contamination in the semiconductor manufacturing process or a sick house. This is caused by low molecular weight components contained in the polymer. The low molecular weight component is caused by a non-reacted monomer produced during polymerization, a reacted product such as an oligomer produced by reaction, a polymerization assisting agent such as soap used in polymerization, a plasticizer directly added to a polymer, an additive such as an antioxidant, a molding assisting agent such as a mold release agent added at the time of polymer molding, a lubricating oil component used in a molding machine, a contaminant from an environment or apparatus, or a degraded and decomposed product of a polymer during production.

Conventionally, various apparatuses and methods for degassing/exhausting unnecessary gas from a high-molecular polymer have been proposed. For example, Japanese Unexamined Patent Application Publication (JP-A) No. H7-88927 (Patent Document 1) discloses an extruder for extruding a polymer from the upstream to the downstream by rotating a screw in a cylinder having a plurality of vents and a degassing/exhausting method in this extruder. In this degassing/exhausting method, when carrying out exhaust by the use of a vacuum pump connected to the vents, a discharged gas from the downstream-side vent is led into the upstream-side vent, thereby carrying out the degassing/exhaust. Further, Patent Document 1 also describes to provide a water inlet portion on the upstream side of each vent and inject water through the water inlet portions.

On the other hand, Japanese Unexamined Patent Application Publication (JP-A) No. H7-164509 (Patent Document 2) discloses a twin-screw extruder comprising a cylinder having an injection water dispersing zone for supplying water to a polymer and a degassing zone for evaporating volatile components in the polymer along with the water. Further, Patent Document 2 proposes to provide a low-pressure expansion zone between the injection water dispersing zone and the degassing zone in order to efficiently evaporate the volatile components in the polymer along with the water. By providing the low-pressure expansion zone, it is possible to grow bubbles of the water dispersed into the molten polymer in the low-pressure expansion zone, then break the bubbles at a downstream end portion of the low-pressure expansion zone, and supply the molten polymer to the degassing zone. Therefore, in the structure of Patent Document 2, it is possible to efficiently remove the volatile components from the molten polymer.

Further, Japanese Unexamined Patent Application Publication (JP-A) No. H8-207118 (Patent Document 3) proposes a volatile matter removal method for a vent-type twin-screw extruder for removing volatile matter from a thermoplastic resin. The proposed volatile matter removal method for the twin-screw extruder selects a position of injecting, under pressure, a liquid degassing assisting agent such as water into a thermoplastic resin, mixes/disperses the liquid degassing assisting agent into the thermoplastic resin while maintaining a pressure of the thermoplastic resin at a saturation pressure or more of the liquid degassing assisting agent, and then reduces the pressure to the atmospheric pressure or less, thereby evaporating volatile matter along with the liquid degassing assisting agent and discharging them to the outside of a cylinder. According to this removal method, since the liquid degassing assisting agent at the pressure-injecting position is maintained at the pressure equal to or greater than the saturation vapor pressure, the liquid degassing assisting agent is not evaporated but is dispersed into the molten polymer in the form of fine particles. As a result, the total area of the particles of the liquid degassing assisting agent increases significantly so that the movement of the volatile matter into the liquid degassing assisting agent is facilitated. When the pressure is reduced to the atmospheric pressure or less in this state, the volatile matter is rapidly evaporated along with the liquid degassing assisting agent and discharged to the outside of the cylinder.

As the twin-screw extruder for realizing the foregoing removal method, Patent Document 3 discloses an extruder that is provided with a pressure injection port for injecting under pressure the liquid degassing assisting agent, upstream of a vent port where the pressure is reduced to the atmospheric pressure or less, and further provided with a mixing element and a resistor between the pressure injection port and the upstream side of the vent port.

Next, Japanese Unexamined Patent Application Publication (JP-A) No. 2000-309019 (Patent Document 4) discloses a degassing mixing extruder having a structure that is provided with a blocking portion upstream of a vent portion and further provided with a mixing portion upstream of the blocking portion in order to apply a degassing treatment to a resin material. Further, Patent Document 4 clarifies that highly efficient degassing can be realized by providing a liquid degassing assisting agent injection nozzle at the mixing portion and increasing the pressure of the resin material staying at the mixing portion to a vapor pressure or more of a degassing assisting agent to provide the high pressure of the resin material.

### Disclosure of the Invention

As described above, Patent Document 1 discloses the extruder that performs the degassing/exhaust by leading the discharged gas from the downstream-side vent into the upstream-side vent and Patent Document 2 discloses the extruder provided with the low-pressure expansion zone between the injection water dispersing zone and the degassing zone. Further, Patent Document 3 discloses the extruder provided with the mixing element and the resistor between the pressure injection port and the vent port and Patent Document 4 discloses the extruder provided with the mixing portion upstream of the blocking portion.

As clear from this, in Patent Documents 1 to 4, it is described to improve the structure of the extruder itself or the structure in the exhaust system of the cylinder of the extruder, thereby removing the volatile matter in the polymer.

However, it has been found that it is not possible to prevent the incorporation of degraded and decomposed products or contaminants into the polymer only by improving the structure of the extruder itself or the structure in the exhaust system of the cylinder of the extruder as described in Patent Documents 1 to 4. That is, Patent Documents 1 to 4 only aim to remove the volatile components existing inside the polymer, but do not consider at all about removing contaminants added to the polymer from the exterior or the like.

This invention looks into the existence of contaminants added to an extruder from the exterior and contaminants such as degraded and decomposed products generated in the extruder itself and incorporated into a polymer and aims for a producing apparatus and method that can suppress the incorporation thereof and produce a high purity polymer. That is, this invention has found that degraded and decomposed products or contaminants are incorporated into a polymer due to (1) degraded and decomposed products generated by contact of a molten polymer with the surface of a member, (2) contaminants contained in injected water, and (3) backflow of surface contaminants in the exhaust system and, based on this knowledge, proposes a technique of preventing the generation and incorporation of the contaminants and so on.

According to the study of the present inventors, it has been found that a polymer low molecular weight component having a molecular weight of 1000 or less is produced by reaction on a contact surface between a polymer heated and melted and a normally used apparatus member of Ni, Fe, Cr, or the like, wherein the molten polymer is decomposed due to catalytic action of Ni, Fe, Cr, or the like. It has also been found that organic matter and contaminants such as metal, halogen, and ions contained in injected water are incorporated into the molten polymer. Further, it has also been found that removed low molecular weight components remain in the exhaust system and are reincorporated due to back diffusion along with oil components of an exhaust pump and volatile components of rubber of gaskets, flanges, and so on, and it has been clarified that it is difficult to suppress and remove these contaminants by the foregoing extruders described in Patent Documents 1 to 4.

It is therefore an object of this invention to provide a polymer producing apparatus that can obtain a high purity polymer by reducing at least one of contamination of a polymer due to generation of degraded and decomposed products, contamination from injected water, and contamination from an exhaust system.

It is another object of this invention to provide a method of producing a high purity polymer while preventing contamination of a polymer during polymer purification.

It is still another object of this invention to provide a polymer producing apparatus that can obtain a high purity polymer by reducing an adverse influence due to a polymer having a molecular weight of 1000 or less, particularly a molecular weight of 200 to 400.

According to the invention of claim 1, there is provided a polymer producing apparatus having a structure comprising an inlet port for injecting a solvent and a vent opening portion for carrying out exhaust, wherein the solvent is injected into a molten polymer through said inlet port, while the exhaust is carried out through said vent opening portion, said polymer producing apparatus characterized in that at least part of at least one of a surface of a member (a screw, a cylinder, and so on) adapted to contact said molten polymer, said vent opening portion, an inner surface of piping of an exhaust portion, and a gas contact surface of an exhaust pump member is covered with an oxide film.

Specifically, according to the invention of claim 1, the surface of the apparatus member adapted to contact the polymer is covered with the oxide film by an oxidation passivation treatment, thereby preventing generation of low molecular weight components due to degradation of the polymer. The oxidation passivation treatment is preferably a chromium oxidation passivation treatment or an aluminum oxidation passivation treatment. The oxide film obtained by the oxidation passivation treatment is preferably a passive metal oxide film, particularly a metal oxide film containing at least one of aluminum and chromium. By applying the oxidation passivation treatment to the inner surface of the apparatus in this manner, it is possible to reduce the generation of organic matter due to degradation of the polymer, i.e. the generation of outgas components. Further, as the inner surface of the apparatus subjected to the oxidation treatment, the gas contact inner surface of the exhaust piping and the gas contact inner surface of the pump are also preferably subjected to the oxidation treatment. This is because adhesion of a discharged gas, such as removed low molecular weight components, to the piping can be reduced so that it is possible to reduce the contamination amount due to reincorporation thereof into the polymer.

When the contact surface of the apparatus with the molten polymer and the gas contact surface are covered with the aluminum oxide passive film or the chromium oxide passive film, since the catalytic action of these films is quite weak, it is possible to suppress a change in quality or thermal decomposition of the polymer and decomposition of the gas at high temperature, which is thus suitable for the processing at high temperature. Particularly, since a viscosity of a polymer decreases as the temperature rises so that the processing amount increases, the high temperature processing is preferable, but, conversely, there is a problem that there occurs degradation due to thermal decomposition. In contrast, since the thermal decomposition occurring temperature is much higher on the surface of the foregoing passive film as compared with Ni or the like, the high temperature processing is enabled where the thermal decomposition is suppressed.

According to the invention of claim 6, there is provided a polymer producing apparatus having a structure comprising an inlet port for injecting a solvent and a vent opening portion for carrying out exhaust, wherein the solvent is injected into a molten polymer through said inlet port, while the exhaust is carried out through said vent opening portion, said polymer producing apparatus characterized in that a flange gasket at a joining portion between members including said inlet port, said vent opening portion, and an exhaust portion is made of one of a metal, a ceramic, and a perfluoro rubber.

When the conventional rubber flange or gasket is used, organic matter is released from the rubber due to high temperature to contaminate the polymer. According to this invention, a metal or ceramic is used for a flange or gasket that is not frequently opened and closed usually, while a perfluoro-based special rubber (low molecular weight components are small in amount) is used for a flange or gasket that is frequently opened and closed. This can prevent organic contamination from the gaskets.

Further, according to this invention, by feeding a small amount of an inert gas from the upstream of the exhaust portion to prevent back diffusion, it is possible to reduce contamination of the polymer caused by back diffusion of contaminants from the exhaust portion, i.e. backflow of oil components used in a pump, the outside air, and once removed low molecular weight components.

Moreover, by injecting, as the solvent, ultrapure water having a TOC (total organic carbon) concentration of organic matter being 1 ppb or less into the molten polymer, it is possible to suppress organic contamination from the injected water. Oxygen dissolved in water induces oxidation degradation of the polymer, thereby causing generation of low molecular weight polymer degraded products leading to outgas. Therefore, as the ultrapure water to be injected, use is preferably made of water with dissolved oxygen removed. As the water with the dissolved oxygen removed, use can be made of inert gas substituted water in which the dissolved oxygen is replaced by an inert gas such as nitrogen, degassed water in which the dissolved oxygen is degassed by pressure reduction, or hydrogen water in which a small amount of hydrogen is dissolved to reduce the dissolved oxygen. The inert gas substituted water is obtained by a bubbling method of bubbling an inert gas in water, a pressure swing method (batch pressure fluctuation method) of fluctuating a pressure of water in an inert gas, or the like. The degassed water is obtained by using a degassing film and reducing a pressure on the side of the degassing film not in contact with water, thereby removing dissolved oxygen in the water. The hydrogen water is obtained by dissolving a small amount of hydrogen in ultrapure water, wherein the concentration of the dissolved hydrogen is normally 2ppm.

According to this invention, there is obtained a polymer molding apparatus that can inject a solvent such as water and is provided with even an exhaust facility. At least one of or all the foregoing features of this invention are also applied to this apparatus. The polymer molding apparatus normally represents an apparatus in which a polymer can be melted in a cylinder by a screw and molded. There are an extrusion molding machine, as described in an embodiment, for manufacturing a film, a sheet, a tube, a fiber, a pellet, or the like by extruding a molten polymer, an injection molding machine for manufacturing a molded product by injecting a molten polymer into a metal mold, a blow molding machine for molding a bag, a bottle, or the like by extruding a molten polymer and expanding the polymer by the use of a gas such as air, and so on. Among blow molding machines, it is an injection molding machine used for molding a parison (preform for blow molding) in the case of injection blow molding that is often used for molding pet bottles or shampoo bottles. According to the polymer molding apparatus of this invention, since a molten polymer with outgas components removed by injected water is cured into a pellet and the pellet can be subjected to molding continuously without opening to the atmosphere, it is possible to suppress contamination due to adhesion caused by pellet storage.

### Brief Description of the Drawings

Fig. 1 is an axial sectional view for explaining a polymer producing apparatus according to this invention (Example 1).
Fig. 2 is a cross-sectional view of the polymer producing apparatus shown in Fig. 1.
Fig. 3 is a graph showing an outgas removal effect achieved by the polymer producing apparatus according to this invention.
Fig. 4 is a block diagram for explaining an exhaust system used in a polymer producing apparatus according to this invention (Example 2).
Fig. 5 is a diagram showing an injection molding machine constituting a polymer producing apparatus according to this invention (Example 3).

### Best Mode for Carrying Out the Invention

Hereinbelow, a polymer producing apparatus according to an embodiment of this invention will be described with reference to the drawings.

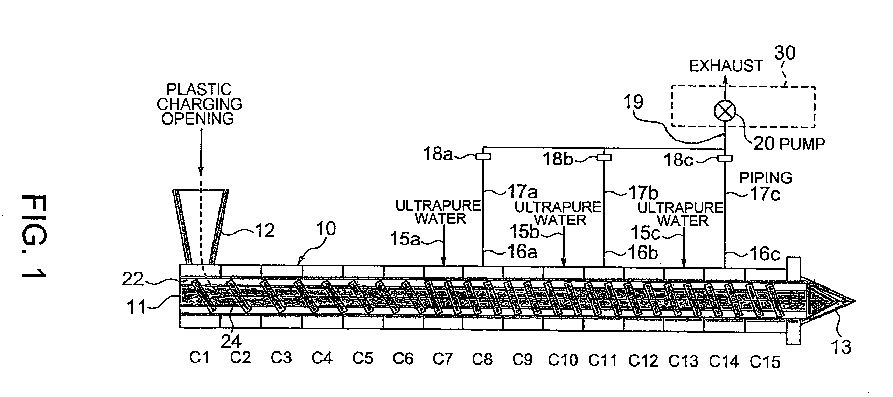

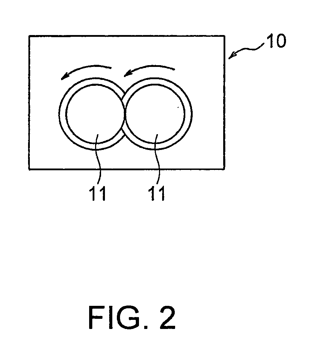

Referring to Figs. 1 and 2, a twin-screw extruder is shown as the polymer producing apparatus according to this invention. As shown in Fig. 1, the twin-screw extruder comprises a cylinder 10 extending in a lateral direction of Fig. 1 (i.e. an axial direction) and screws 11 disposed in the cylinder 10 and adapted to rotate therein. As clear also from Fig. 2, the cylinder 10 defines cylinder spaces extending parallel to the axial direction and the screws 11 are provided in the cylinder spaces, respectively. The shown screws 11 each have a diameter of 44mm and a length of 2310mm.

The twin-screw extruder shown in Fig. 1 comprises a hopper 12 provided at its left end and a die connecting portion 13 provided at its right end and the cylinder 10 is divided into 15 cylinder units C1 to C15 between the hopper 12 and the die connecting portion 13. In this structure, a plastic pellet charged into the hopper 12 as a raw material polymer is heated and melted in the cylinder 10 and, when the screws 11 are rotated in this state, the molten plastic is mixed and transported in the direction from the cylinder unit C1 to the cylinder unit C15. The molten and mixed polymer is extruded into a separately provided die from the die connecting portion 13 so that a product molded into a pellet shape, a film shape, a sheet shape, a tube shape, or a fiber shape is removed from the die.

Herein, the cylinder units C7, C10, and C13 of the shown twin-screw extruder are provided with inlet ports 15a, 15b, and 15c for introducing ultrapure water into the cylinder 10 as a solvent (degassing assisting agent) and the ultrapure water is supplied to the respective inlet ports 15a, 15b, and 15c from a water storage tank (not shown) through piping. Herein, the ultrapure water represents water having a TOC concentration of organic matter being 1 ppb or less. By the use of the ultrapure water as described above, it is possible to prevent contamination of the polymer due to the solvent itself.

Further, the cylinder units C8, C11, and C14 are provided with vent opening portions 16a, 16b, and 16c. The vent opening portions 16a, 16b, and 16c are respectively connected to pipes 17a, 17b, and 17c and further connected to an exhaust system 30 including a pump 20 through pipe flanges 18a, 18b, and 18c provided at the other ends of the respective pipes and another pipe 19. Herein, the pipes 17a to 17c, the pipe flanges 18a to 18c, and the other pipe 19 connected to the vent opening portions 16a to 16c constitute an exhaust portion.

In the shown example, the inlet port 15a and the vent opening portion 16a arranged adjacent to the inlet port 15a on the side of the die connecting portion 13 form a pair and, likewise, the inlet port 15b and the vent opening portion 16b, and the inlet port 15c and the vent opening portion 16c form pairs, respectively.

Next, in this invention, not only the ultrapure water is used as the solvent as described above, but also, in order to minimize an adverse influence to the polymer due to contamination of the apparatus itself, at least part of each of the members adapted to contact the molten polymer is covered with an oxide film. Specifically, in the shown example, the inner surface of the cylinder 10 and the surface of each screw 11 are formed with passive films 22 and 24 by oxidation treatment, respectively, as indicated by thick lines or black portions. In this example, the oxidation treatment of a metal is carried out as a passivation treatment. Chromium or aluminum is considered as the metal to be oxidized, but it is preferable to use aluminum.

Herein, description will be made about the case where aluminum is oxidized and aluminum oxide films are used as the passive films 22 and 24. As a method of forming the aluminum oxide films that function as the passive films 22 and 24, use can be made of, for example, a method described in Unexamined Patent Publication No. Hei 11-302824. When forming aluminum oxide passive films by the use of this method, there are prepared a cylinder 10 and screws 11 each made of stainless steel or the like containing 3 to 7wt% aluminum. By contacting an oxidizing gas with the inner surface of the cylinder 10 and the surface of each screw 11, a predetermined controlled heat treatment is carried out. By this, the aluminum oxide passive films 22 and 24 can be formed on the inner surface of the cylinder 10 and the surface of each screw 11. More specifically, by using a gas having an oxygen concentration of 500ppb to 100ppm as the oxidizing gas and applying the heat treatment to the metal members containing 3 to 7wt% aluminum at a temperature of 700 to 1200°C for about 30 minutes to 3 hours, the required aluminum oxide films can be formed on these metal members.

Further, in the example shown in Fig. 1, not only the cylinder 10 and the screws 11 are formed with the passive films, but also the inner surface of the hopper 12, the inner surfaces of the exhaust pipes 17a to 17c and 19 extending from the vent opening portions 16a to 16c to the pump 20, and the inner surface of the pump 20 are formed with similar passive films (not shown). That is, the inner surfaces of the piping of the exhaust portion are covered with the passive films.

On the other hand, the pipe flanges 18a to 18c and gaskets provided therein are made of special perfluoro rubber, for example, tetrafluoroethyleneperfluorovinylether (FFKM) fluororubber. By the use of the perfluoro rubber in this manner, it is possible to avoid organic contamination of the polymer due to the rubber. The pipe flanges and the gaskets may be made of ceramic or metal.

Hereinbelow, description will be made about the operation of the twin-screw extruder having the foregoing structure. The polymer supplied to the cylinder unit C1 from the hopper 12 is heated and melted, mixed by the rotation of the screws 11, and moved toward the die connecting portion 13 within the cylinder 10. When the ultrapure water is injected into the molten polymer through the inlet port 15a in the cylinder unit C7 during the mixing, the ultrapure water is mixed with the polymer and simultaneously evaporated so as to be dispersed in the form of fine bubbles into the polymer. In this event, outgas components contained in the polymer move into the bubbles and proceed to the vent opening portion 16a. Since the vent opening portion 16a of the cylinder unit C8 is connected to the pump 20 through the pipe 17a and evacuated by the pump 20, the bubbles containing the outgas components from the cylinder unit C7 are discharged to the exterior by the pump 20 through the vent opening portion 16a of the cylinder unit C8. The same operation is performed between the inlet portion 15b of the cylinder unit C10 and the vent opening portion 16b of the cylinder unit C11 and between the inlet portion 15c of the cylinder unit C13 and the vent opening portion 16c of the cylinder unit C14. As a result, it is possible to extrusion-mold a polymer product with a small amount of the outgas components.

### [Example 1]

Next, description will be made about an example in the case where a polymer is actually produced by the use of the twin-screw extruder of Figs. 1 and 2 constituting the polymer producing apparatus according to this invention. In this example, a styrene-based thermoplastic elastomer (SEBS: polystyrene ethylene-butylene copolymer) being a chain polymer and containing a relatively large amount of outgas components was used as a raw material polymer supplied to the hopper 12, thereby carrying out extrusion molding.

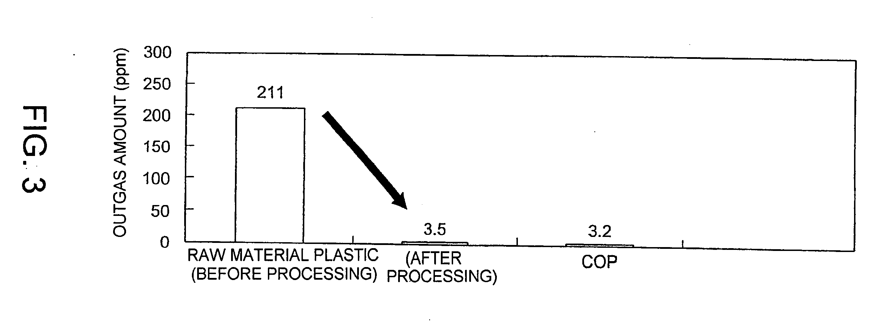

As shown in Fig. 3, an outgas amount of the SEBS as the raw material polymer before supplied to the hopper 12 was 211 ppm (weight ratio). Collected at 100°C for 60 minutes, the outgas amount was analyzed by GC-MS (Gas chromatography-mass spectroscopy).

On the other hand, as a result of analyzing a polymer, removed from the die connecting portion 13 of Fig. 1, under the same conditions, it was found that the outgas amount was reduced to 3.5ppm (weight ratio) as shown in Fig. 3. As clear from this, by the use of the shown twin-screw extruder, it was possible to reduce the outgas amount to 2% of the outgas amount of the raw material polymer.

The same effect was obtained with respect to a diblock copolymer (SEP) or a triblock copolymer (SEPS) composed of a polystyrene ethylene-propylene copolymer.

Generally, there arises no problem in manufacturing semiconductor devices or the like when the outgas amount is 10ppm or less (preferably 5ppm or less), and therefore, it is understood that the twin-screw extruder shown in Fig. 1 enables commercial polymers containing relatively large amounts of volatile components to be used for packages of semiconductor devices, mechanical seals thereof, and so on.

A cyclo-olefin polymer (COP) is normally known as a low-outgas plastic material (polymer) and an outgas amount of the COP is about 3.2ppm as shown in Fig. 3, and therefore, the polymer producing apparatus according to this invention can reduce the outgas amount to the value equivalent to that of the COP. Consequently, this invention enables the commercial polymers to be applied to those members for which only the COP can be used conventionally, and so on.

### [Example 2]

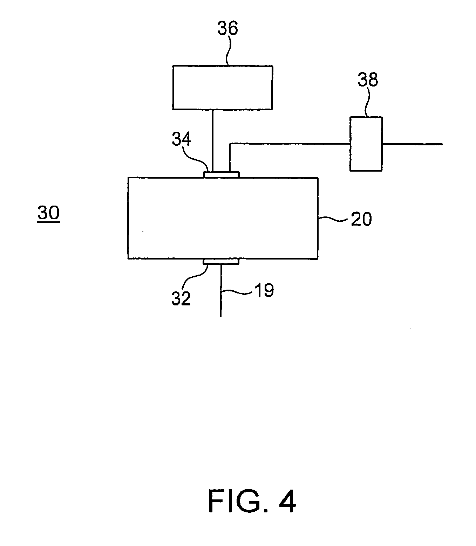

By improving the exhaust system 30 shown in Fig. 1, a polymer producing apparatus according to Example 2 can prevent contamination of a molten polymer due to backflow, back diffusion, or the like of bubbles containing outgas components and so on. Referring to Fig. 4, only an exhaust system 30 is shown for simplification of the drawing. The shown exhaust system 30 comprises, for example, a turbomolecular pump, as a pump 20, having a rotor and a stator and further a suction port 32 and an exhaust port 34. Furthermore, an auxiliary pump 36 is connected to the exhaust port 34. It has been found that when exhaust is performed only by the turbomolecular pump 20 and the auxiliary pump 36 as described above, moisture from the side of the auxiliary pump 36 flows back to the side of the turbomolecular pump 20.

In view of this, in the shown example, an inert gas, for example, a N₂ gas, is introduced to a gas introducing portion (not shown) or the exhaust side of the turbomolecular pump 20 through a mass controller 38 from the upstream of the exhaust side of the turbomolecular pump. In this case, by controlling the flow rate of the N₂ gas at about 10% of the flow rate of the discharged gas (bubbles), it was possible to reduce the moisture to about 10ppb. The reason for this is not clear, but it is estimated that, by introducing the inert gas between the turbomolecular pump 20 and the auxiliary pump 36, the area between the exhaust side of the turbomolecular pump 20 and the auxiliary pump 36 changes from a molecular flow region to a viscous flow region so that the moisture once discharged to the outside of a vacuum chamber by the turbomolecular pump 20 moves as it is in the form of the viscous flow and is then discharged by the auxiliary pump 36, and therefore, the back diffusion of the moisture is difficult to occur.

Further, by adopting such a structure, it is also possible to prevent oil components used in the pump 20 from flowing back to the polymer and, therefore, contamination of the polymer due to the oil components of the pump 20 can also be prevented. In the shown example, the description has been made about the case where the inert gas is supplied to the exhaust side of the pump 20. However, the same effect was obtained even by supplying the inert gas to the side of a pipe 19 in Fig. 4.

### [Example 3]

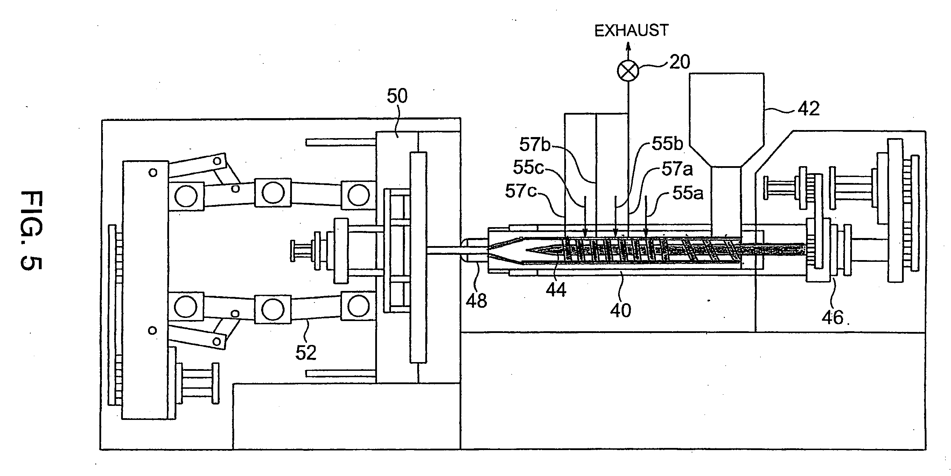

Referring to Fig. 5, an injection molding machine is shown as a polymer producing apparatus according to Example 3 of this invention. The shown injection molding machine comprises a heating cylinder 40, a hopper 42, and a screw 44. The screw 44 is rotated in the heating cylinder 40 by a driving portion 46 and moved laterally in the figure. A molten plastic as a polymer is injected into a metal mold 50 from a nozzle 48 provided at a forward end of the cylinder 40. The metal mold 50 is opened and closed by a toggle mechanism 52. Since the operation itself of the injection molding machine is well known, no detailed description is given here.

In the shown injection molding machine, like in the twin-screw extruder shown in Fig. 1, those members adapted to contact the molten polymer, for example, the inner surface of the heating cylinder 40, the surface of the screw 44, and the inner surface of the hopper 42, are formed with passive oxide films (indicated by thick lines or black portions) by passivation treatment. Each of the passive oxide films also in this case is preferably an oxide film of a metal such as chromium or aluminum and, particularly, it is desirable that the aluminum oxide film be formed. Since the aluminum oxide film can be formed by the technique described with reference to Fig. 1, description thereof is omitted here.

Further, the shown injection molding machine is provided with inlet ports 55a, 55b, and 55c for injecting ultrapure water into the heating cylinder 40 and further provided with vent opening portions 57a, 57b, and 57c for exhausting those components that have been moved into bubbles by injecting the ultrapure water, wherein the vent opening portions 57a, 57b, and 57c are connected to a pump 20 through piping. Also in this case, the pump 20 and the piping are applied with the foregoing passivation treatment. Further, an exhaust system including the pump 20 is preferably configured as shown in Fig. 4.

### Industrial Applicability

As described above, according to this invention, it is possible to minimize generation of outgas to obtain a high purity polymer by reducing contamination of a polymer caused by an apparatus itself. Further, it is possible to prevent contamination from injection water by using ultrapure water as the injection water. Further, by preventing back diffusion of gas discharged by a pump, contamination due to the backflow of the gas can also be prevented.

In this manner, according to this invention, the polymer with a very small amount of volatile outgas can be produced by improving the structure of the apparatus. Therefore, this invention can be used not only for producing polymers for plastic members forming semiconductor devices, but also for producing polymers for use in housing construction materials, automobiles, electrics/electronics, medical services, biotechnology, and so on, and thus, its application range is quite wide.

## Claims

1. A polymer producing apparatus having a structure comprising an inlet port for injecting a solvent and a vent opening portion for carrying out exhaust, wherein the solvent is injected into a molten polymer through said inlet port, while the exhaust is carried out through said vent opening portion, said polymer producing apparatus **characterized in that** at least part of at least one of a surface of a member adapted to contact said molten polymer, said vent opening portion, an inner surface of piping of an exhaust portion, and a gas contact surface of an exhaust pump member is covered with an oxide film.

2. A polymer producing apparatus according to claim 1, wherein said polymer producing apparatus is an extruder comprising a screw.

3. A polymer producing apparatus according to claim 1, **characterized in that** said oxide film is a passive metal oxide film.

4. A polymer producing apparatus according to claim 3, **characterized in that** a metal used for said metal oxide film contains at least one of aluminum and chromium.

5. A polymer producing apparatus according to claim 1, **characterized in that** a flange gasket at a joining portion between members including said inlet port, said vent opening portion, and said exhaust portion is made of one of a metal, a ceramic, and a perfluoro rubber.

6. A polymer producing apparatus having a structure comprising an inlet port for injecting a solvent and a vent opening portion for carrying out exhaust, wherein the solvent is injected into a molten polymer through said inlet port, while the exhaust is carried out through said vent opening portion, said polymer producing apparatus **characterized in that** a flange gasket at a joining portion between members including said inlet port, said vent opening portion, and an exhaust portion is made of one of a metal, a ceramic, and a perfluoro rubber.

7. A polymer producing apparatus according to claim 1 or 6, **characterized in that** said solvent is ultrapure water.

8. A polymer producing apparatus according to claim 7, **characterized in that** said ultrapure water is one of inert gas substituted water, degassed water, and hydrogen water.

9. A polymer producing apparatus according to claim 1 or 6, **characterized by** comprising an exhaust pump connected to said vent opening portion, wherein an inert gas is supplied to said exhaust pump for backflow prevention.

10. An operation method of a producing apparatus for manufacturing a polymer while injecting a solvent into a molten polymer through an inlet port and performing exhaust through a vent opening portion by a pump, said operation method of the producing apparatus **characterized by** feeding an inert gas to the upstream of said pump or a pump purge portion.

11. A polymer producing apparatus that injects a solvent into a molten polymer and performs exhaust through a vent opening portion, said polymer producing apparatus **characterized in that** a TOC concentration of organic matter contained in the injected solvent is 1 ppb or less.

12. A polymer purification method of mixing a molten polymer while injecting water into the molten polymer and performing exhaust, said polymer purification method **characterized in that** said water is one of inert gas substituted water, degassed water, and hydrogen water and has a TOC concentration of organic matter being 1 ppb or less.
